Europäisches Patentamt

European Patent Office

Office européen des brevets

(11) Veröffentlichungsnummer: **0 496 198 A2**

## EUROPÄISCHE PATENTANMELDUNG

(21) Anmeldenummer: **92100103.8**

(51) Int. Cl.5: **B09B 3/00**

(22) Anmeldetag: **07.01.92**

(30) Priorität: **23.01.91 IE 237/91**

(43) Veröffentlichungstag der Anmeldung:
**29.07.92 Patentblatt 92/31**

(84) Benannte Vertragsstaaten:
**AT BE DE FR LU NL**

(71) Anmelder: **H.P. Chemie Pelzer Research & Development Ltd.**
**Villa Thomas, Doneraile Walk**
**Tramore, County Waterford(IE)**

(72) Erfinder: **Pelzer, Helmut, Dipl.-Ing.**
**Neue Strasse 5**
**W-5804 Herdecke-Ende(DE)**

(74) Vertreter: **Schneider, Wilhelm, Dipl.-Phys.**
**Merckelbachweg 3**
**W-4770 Soest(DE)**

(54) **Anlage zur biologischen Schadstoffbeseitigung kontaminierter Feststoffe und Verfahren zur Schadstoffbeseitigung mit dieser Anlage.**

(57) Die Erfindung betrifft eine Anlage zur biologischen Schadstoffbeseitigung kontaminierter Feststoffe, insbesondere von mit Kohlenwasserstoffen verunreinigten Erdmassen durch Bakterienkulturen in Feststoff-Reaktoren.

Die erfinderische Lösung besteht darin, daß verunreinigte Böden in einer Anlage behandelt werden, die aus einer Fördereinrichtung (2) mit umlaufenden Endlosband (3) aus Lochblechen (4) und Halterungen (5) für die zu transportierenden Flachbett-Reaktoren (1) und darunter angeordneten Bodenwannen (6), sowie einem darüber angeordneten Benetzungssystem (7) besteht, von einem mit Heizungs- (8) und Kühlungs- (9) sowie Abluftregelungseinrichtungen (10) ausgerüstetem Gehäuse (11) umschlossen ist.

Die Bodenwannen (6) sind vorzugsweise in Sektionen (15) aufgeteilt. Das Benetzungssystem (7) besteht aus einzeln gesschalteten Teilsystemen (16).

Die Flachbett-Reaktoren (1) sind mit Mischeinrichtungen (19) ausgestattet. Beispielsweise sind die Antriebsstümpfe (21) der Wellen (20) der Mischeinrichtungen (19) in den Flachbett-Reaktoren (1) mit Zahnrädern (22) ausgerüstet und vor der Fördereinrichtung (2) eine feststehende Zahnstange (23) angeordnet.

Fig. 1

Gegenstand der Erfindung ist eine Anlage zur biologischen Schadstoffbeseitigung kontaminierter Feststoffe, insbesonder von mit Kohlenwasserstofen verunreinigten Erdmassen durch Bakterienkulturen.

Das Problem der Reinigung kontaminierter Böden hat zur Schaffung verschiedener Verfahren und Vorrichtungen gefuhrt, von denen beispielsweise die Deponierung, die Verbrennung, die biologische in-situ-Behandlung, die biologische Behandlung im Beet sowie chemische Wasch- und Extraktionsverfahren zu erwähnen sind.

Bei einigen biologischen Reinigungsverfahren werden Drehtrommeln eingesetzt. So werden gemäß DE OS 38 24 009 aus der kontaminierten Erde unter Zugabe von Extraktionsflüssigkeit in der Drehtrommel Kugeln geformt, aus denen mittels Preßwalzen die Schadflüssigkeit ausgepreßt wird. Die Kugeln werden anschließend wieder zerkleinert. Dem zerkleinerten Boden können dann Mikroorganismen zugesetzt werden.

Weiterhin ist ein mehrstufiges Reinigungsverfahren bekannt, bei dem die verunreinigten Böden in mehreren Stufen hintereinander mit einer Lösung gemischt und das in jeder Stufe anfallende Lösungsgemisch mit den Schadstoffanteilen abgezogen wird. Die entsprechende Vorrichtung besteht aus einem Homogenisierungsbehälter nach dem Prinzip des Betonmischers mit mehreren nachgeschalteten Waschtrommeln (DE OS 37 26 282).

Bei einem weiteren bekannten Entsorgungsverfahren wird in einem mobilen rotierenden Behäter mit schneckenförmigen Einbauten das verunreinigte Material in eine Emulsion eingebracht und danach in Wäschern ausgewaschen. Die schadstoffbelastete Flüssigphase wird in Absetzbecken geleitet und dort mit Bakterien versetzt.

Bekannt ist weiterhin eine Anlage zur Entsorgung kontaminierter Erdmassen bei der in einem rotierenden Freifallmischer kontaminierter Boden mit Wasser gemischt und Bakterien beigegeben werden. Über mehrere Wäscher gelangt das kontaminierte Waschwasser in einen Entwässerungscontainer, wo die Schwebstoffanteile ausgeflockt und vom Wasser getrennt werden. Die kontaminierten Anteile werden in einem Bioreaktor bei ca. 35 Grad Celsius und Sauerstoffzufuhr durch die Mikroorganismen zu Kohlendioxid und Wasser verarbeitet (WO 89/96992).

Schließlich kann insbesondere durch Öl verseuchte Erde durch Erhitzen auf Verdampfungstemperatur einer Aufschlämmung in einer Durchlaufkammer regeneriert werden. Die Durchlaufkammer besteht aus mehreren übereinander angeordneten und bausteinartig zusammengesetzten Etagen, von denen jede eine Wanne mit Kettenförderer zur Weiterförderung der Aufschlämmung enthält. Die nicht kondensierbaren Dämpfe werden verbrannt.

All diese Verfahren sind mit spezifischen Nachteilen behaftet. Sie erfordern einen erheblichen apparatetechnischen Aufwand und sind unflexibel. Außerdem führen sie teilweise zu Umweltbelastungen, zu beträchtlichen Mengen an Deponiegut oder erfordern extrem hohe Betriebskosten, bei denen der gereinigte Boden danach keine organischen Bestandteile mehr aufweist und damit biologisch tot ist (Drehrohröfen, Pyrolysekammern).

Der Erfindung liegt die Aufgabe zugrunde, eine Anlage zur biologischen Entsorgung schadstoffhaltiger Feststoffe, insbesondere von mit Kohlenwasserstoffen verunreinigten Erdmassen durch Bakterien in Feststoff.Reaktoren zu entwickeln, in der mehrere mit verunreinigten Böden gefüllte, transportable Reaktoren unter optimaler Ausnutzung der Reaktionslösung und Behandlung gleichzeitig entsorgt und das Entweichen von flüssigen und gasförmigen Schadstoffen in die Umwelt vermieden werden kann.

Erfindungsgemäß wird die Aufgabe dadurch gelöst, daß die mit Kohlenwasserstoffen verunreinigten Feststofe durch den Einsatz von Mikroorganismen und Nährsalzlösung oder Wasser bzw. im Gemisch biologisch von den Schadstoffen in einer Anlage entsorgt werden, die aus einer Fördereinrichtung mit umlaufendem Endlosband aus Lochblechen und Halterungen für die zu transportierenden, stapelbaren Flachbett.Reaktoren und darunter angeordneten Bodenwannen, sowie einem daüber angeordneten Benetzungssystem besteht, die von einem mit Heizungs- / Kühlungs- sowie Abluftregelungseinrichtungen ausgerüstetem Gehäuse umschlossen ist.

Die Fördereinrichtung kann ein horizontaler Plattenförderer oder ein mit Schwerlastrollen gestützter Kettenförderer sein. Mit der Fördereinrichtung werden die Flachbett-Reaktoren in der Anlage bewegt und verbleiben während der gesamten Reaktionszeit auf dem Endlosband. Nach erfolgtem Umlauf ist gleichzeitig die Verweilzeit und die Reaktionszeit im Flachbett-Reaktor beendet.

Das über der Fördereinrichtung befindliche Benetzungssystem ist als Brausesystem gestaltet oder besteht aus Düseneinrichtungen. Das Benetzungssystem besteht aus einzeln geschalteten Teilsystemen, durch die die zu behandelnden Feststoffe mit Nährlösungen oder Wasser bzw. als Gemisch in bestimmten Abschnitten berieselt werden.

Das Wasser oder die Flüssigkeit mit dem Nährsalz strömt durch die siebartig gelochten Böden der Flachbett-Reaktoren und durch das Endlosband aus Lochblechen in die darunter angeordneten Bodenwannen. Die Bodenwannen sind vorzugsweise in Sektionen aufgeteilt, so daß durch Auffangen der Flüssigkeit in den bestimmten Abschnitten echte Kreuz-Gleichstrom- oder Kreuz-Gegenstrom-Verfahren für die Durchströmung der Reaktionslösungen durch den zu behandelnden Feststoff zu erzielen sind und damit eine optimale Ausnutzung der Nährlösung und der Behandlung des Feststoffes möglich ist. Die in den Bodenwannen aufgefangenen Flüssigkeit wird in einer Filtereinrichtung gefiltert und dem Benetzungssystem erneut zugeführt.

Die Flachbett-Reaktoren sind mit Mischeinrichtungen ausgestattet. Die Antriebsstümpfe der Wellen dieser Mischeinrichtungen sind mit Zahnrädern ausgerüstet und vor der Fördereinrichtung ist eine feststehende Zahnstange der Kettenstange angeordnet. Die Antriebsstümpfe der Wellen der Mischeinrichtungen werden vor dem Aufsetzen auf die Fördereinrichtung mit den entsprechenden Zahnrädern versehen. Diese greifen beim Aufsetzen des Flachbett-Reaktors beispielsweise in die Zahnstange ein und die Wellen werden damit infolge der Horizontalbewegung des Reaktors an der feststehenden Zahnstange vorbei durch Drehen der Zahnräder gedreht.

Statt der feststehenden Zahn- oder Kettenstange können auch umlaufende, gesondert angetriebene Zahn- oder Rollenketten eingesetzt werden, die eine der Bewegungsgeschwindigkeit der Flachbett-Reaktoren weitgehend unabhängige Drehzahl der Wellen der Mischeinrichtungen zulassen.

DeR Antrieb der Wellen der Mischeinrichtungen kann auch extern über mobile Antriebsmotore erfolgen.

Die Anlage befindet sich zur Vermeidung von Belastungen der Umwelt durch flüssige oder freiwerdende gasförmige Stoffe in einem Gehäuse mit Ablauftregelung, in dem gleichzeitig Heizungs. und Kühlungseinrichtungen vorhanden sind.

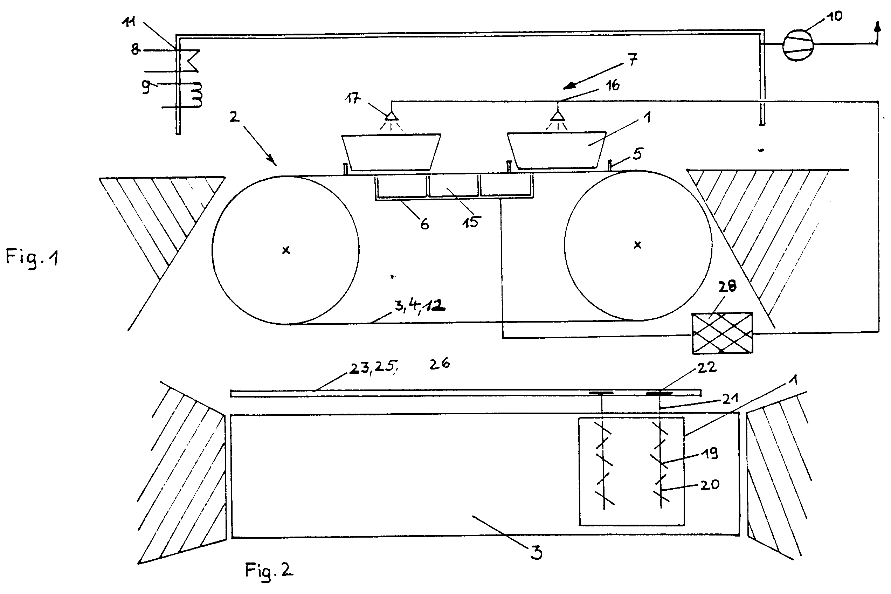

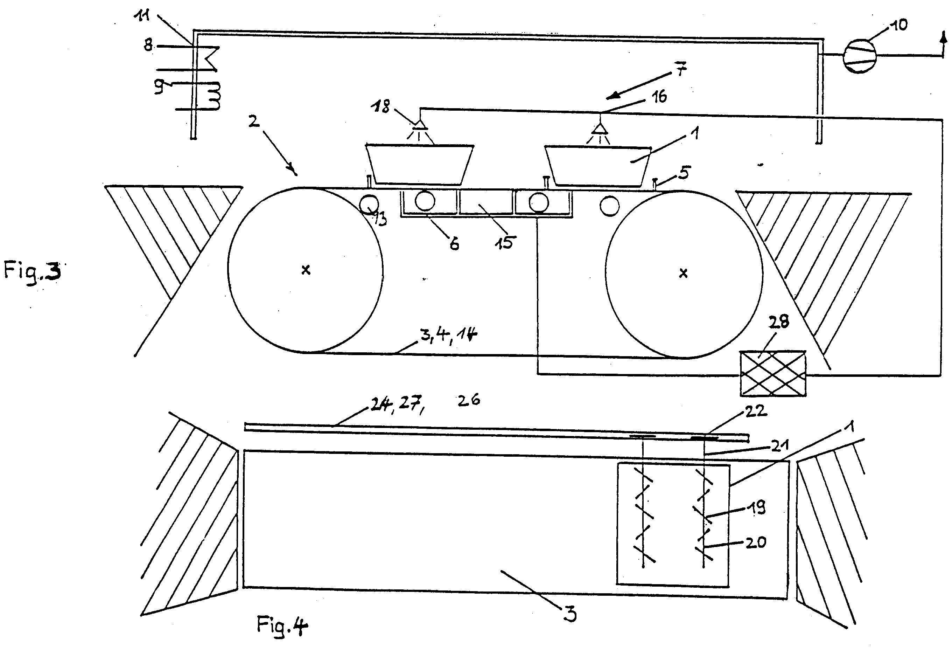

Die erfindungsgemäße Anlage wird nachfolgend anhand eines Ausführungsbeispiels näher erläutert. Dabei zeigen die Figuren 1 und 2 die Seiten- bzw. Draufsicht eines Schemas dieser Anlage mit einem Plattenförderer und die Figuren 3 und 4 eine Variante mit einem Kettenförderer.

Die mit kontaminierten Böden frisch gefüllten Flachbett-Reaktoren (1), denen Mikroorganismen zugegeben wurden, werden vor dem Aufsetzen auf den horizontalen Plattenförderer (12) an den Antriebsstümpfen (21) der Wellen (20) der Mischeinrichtungen (19) mit entsprechenden Zahnrädern (22) versehen und am Anfang des umlaufenden Endlosbandes (3) mit Halterungen (5) für die zu transportierenden und auch stapelbaren Flachbett-Reaktoren (1) mittels Gabelstapler aufgegeben. Die Zahnräder (22) greifen beim Aufsetzen des Flachbett-Reaktors (1) in die vor dem Plattenförderer (12) feststehenden Zahnstange (23) ein und die Wellen (20) der Mischeinrichtung (19) werden infolge der Horizontalbewegung des Reaktors (1) an der feststehenden Zahnstange (23) vorbei durch Drehen der Zahnräder (22) gedreht.

Durch ein darüber angeordnetes Brausesystem (17) werden über einzeln geschaltete Teilsysteme (16) Nährstofflösungen für die Mikroorganismen und Wasser als Einzelstoffe in festgelegten Abschnitten über den gefüllten Flachbett-Reaktor (1) aufgegeben und vermischt. Die erforderliche Temperatur von ca. 15 bis 35 Grad Celsius wird durch die Heizungs- (8) und Kühlungseinrichtung (9) aufrechterhalten. Mit dem Plattenförderer (12) werden die Flachbettreaktoren (1) weiterbewegt.

Die Flüssigkeit (Nährstofflösung und Wasser) strömt durch die siebartig gelochten Böden der Flachbett.Reaktoren (1) und durch die Lochbleche (4) des Endlosbandes (3) in die darunter angeordneten Bodenwannen (6), die in mehrere Sektionen (15) aufgeteilt sind, wodurch echte Kreuz-Gegenstrom-Verfahren für die Durchströmung der Reaktionslösung durch den zu behandelnden Feststoff erzielt werden. Die in den Bodenwannen (6) aufgefangene Flüssigkeit wird nach Passieren einer Filtereinrichtung (28) dem Brausesystem (17) erneut zugeführt. Anfallende Abgase werden mittels Abluftregelungseinrichtung (10) aufgefangen und entfernt.

Nach erfolgtem Umlauf ist mit Erreichen des Endes des Plattenförderers (12) gleichzeitig die Reaktionszeit und die Verweilzeit der behandelten Böden in der Anlage beendet. Mittels Gabelstapler werden die Flachbett-Reaktoren mit den nunmehr kontaminationsfreien Böden entnommen. Die behandelteen Böden können nun unbedenklich in der Natur verfüllt werden.

Weiterer Gegenstand der Erfindung ist Verfahren zur biologischen Schadstoffbeseitigung kontaminierter Feststoffe mi einer Anlage der vorstehend beschriebenen Art. Dabei werden die vorzugsweise in gestapelten Flachbett-Reaktoren 1 abgefüllten, kontaminierten Feststoffe mit Mikroorganismen und über ein Benetzungssystem 7 mit Nährstofflösung für die Mikroorganismen und/oder Wasser versetzt und durch die in den Flachbett-Reaktoren 1 integrierten Mischeinrichtungen 19 vermischt, bei 15 bis 35° C bis zum völligen Abbau der Kontamination weiter im Umlauf auf der Fördereinrichtung 2 geführt und behandelt, sowie die durch die Böden der Flachbett-Reaktoren 1 und Lochbleche 4 des Endlosbandes 3 ausströmende Flüssigkeit in den darunter befindlichen Bodenwannen 6 aufgefangen, gefiltert und abgegeben bzw. über einen Kreislauf erneut der Behandlung der Feststoffe wieder zugeführt.

## Patentansprüche

1. Anlage zur biologischen Schadstoffbeseitigung kontaminierter Feststoffe, insbesondere von mit Kohlenwasserstoffen verunreinigten Erdmassen durch Bakterienkulturen,
**dadurch gekennzeichnet,**
daß die Anlage, die aus einer Fördereinrichtung (2) mit umlaufenden Endlosband (3) aus Lochblechen (4) und Halterungen (5) für die zu transportierenden, stapelbaren Flachbett-Reaktoren (1) und darunter angeordneten Bodenwannen (6), sowie einem darüber angeordneten Benetzungssystem (7) besteht, von einem mit Heizungs- (8) und Kühlungs- (9) sowie Abluftregelungseinrichtungen (10) ausgerüsteten Gehäuse (11) umschlossen ist.

2. Anlage nach Anspruch 1,
**dadurch gekennzeichnet,**
daß die Fördereinrichtung (2) ein horizontaler Plattenförderer (12) ist.

3. Anlage nach Anspruch 1 und 2,
**dadurch gekennzeichnet,**
daß die Fördereinrichtung (2) ein mit Schwerlastrollen (13) gestützter Kettenförderer (14) ist.

4. Anlage nach Anspruch 1,
**dadurch gekennzeichnet,**
daß die Bodenwannen (6) vorzugsweise in Sektionen (15) aufgeteilt sind.

5. Anlage nach Anspruch 1,
**dadurch gekennzeichnet,**
daß das Benetzungssystem (7) aus einzeln geschalteten Teilsystemen (16) besteht.

6. Anlage nach Anspruch 1 und 5,
**dadurch gekennzeichnet,**
daß das Benetzungssystem (7) als Brausesystem (17) ausgestaltet ist.

7. Anlage nach Anspruch 1, 5 und 6,
**dadurch gekennzeichnet,**
daß das Benetzungssystem (7) aus Düseneinrichtungen (18) besteht.

8. Anlage nach Anspruch 1 und 4 bis 7,
**dadurch gekennzeichnet,**
daß zwischen Bodenwannen (6) und dem Benetzungssystem (7) eine Filtereinrichtung (28) zwischengeschaltet ist.

9. Anlage nach Anspruch 1,
**dadurch gekennzeichnet,**
daß die Flachbett-Reaktoren (1) mit Mischeinrichtungen (19) ausgestattet sind.

10. Anlage nach Anspruch 1, 2 und 9,
**dadurch gekennzeichnet,**

daß die Antriebsstümpfe (21) der Wellen (20) der Mischeinrichtungen (19) in den Flachbett-Reaktoren (1) mit Zahnrädern (22) ausgerüstet sind und vor der Fördereinrichtung (2) eine feststehende Zahnstange (23) angeordnet ist.

11. Anlage nach Anspruch 1, 3, 9 und 10,
**dadurch gekennzeichnet,**
daß vor der Fördereinrichtung (2) eine feststehende Kettenstange (24) angeordnet ist.

12. Anlage nach Anspruch 1, 2 , 9 und 10,
**dadurch gekennzeichnet,**
daß vor der Fördereinrichtung (2) eine umlaufende Zahnkette (25) mit gesondertem Antrieb (26) angeordnet ist.

13. Anlage nach Anspruch 1, 2, 9 und 11,
**dadurch gekennzeichnet,**
daß vor der Fördereinrichtung (2) eine umlaufende Rollenkette (27) mit gesondertem Antrieb (26) angeordnet ist.

14. Verfahren zur biologischen Schadstoffbeseitigung kontaminierter Feststoffe, nach Anspruch 1 bis 13,
**dadurch gekennzeichnet,**
daß die vorzugsweise in gestapelten Flachbett-Reaktoren (1) abgefüllten kontaminierten Feststoffe mit Mikroorganismen und über ein Benetzungssystem (7) mit Nährstofflösung für die Mikroorganismen und / oder Wasser versetzt und durch die in den Flachbett-Reaktoren (1) integrierten Mischeinrichtungen (19) vermischt werden, bei 15 bis 35 Grad Celsius bis zum völligen Abbau der Kontamination weiter im Umlauf auf der Fördereinrichtung (2) geführt und behandelt werden, sowie die durch die Böden der Flachbett-Reaktoren (1) und Lochbleche (4) des Endlosbandes (3) ausströmende Flüssigkeit in den darunter befindlichen Bodenwannen (6) aufgefangen, gefiltert und abgegeben bzw. über einen Kreislauf erneut der Behandlung der Feststoffe wieder zugeführt wird.

Fig. 1

Fig. 2

EP 0 496 198 A2

Fig.3

11
8
9
10
7
18
16
1
5
2
13
6
15
3,4,14
28

24,27,
26
22
21
19
20
3

Fig.4